# DEMANDE DE BREVET EUROPEEN

(11) **EP 4 703 265 A1**
(43) Date de publication de la demande: **04.03.2026**
(21) Numéro de dépôt: 25195821.1
(22) Date de dépôt: 13.08.2025
(51) Int. Cl.: B64C 25/32, B64D 27/35, B64D 41/00, B64F 1/00, B64F 1/35

(54) **SYSTEME DE RECEPTION D ENERGIE ELECTRIQUE POUR LE DEPLACEMENT D'UN AERONEF EN PHASE DE ROULAGE**

(30) Priorité: 30.08.2024 FR 2409255
(71) Demandeur: Airbus (S.A.S.), 31700 Blagnac (FR)
(72) Inventeur: ROUYRE, François, 31700 Blagnac Cedex (FR); CHASSAIGNE, Didier, 31700 Blagnac Cedex (FR); CREPEL, Olivier, 31700 Blagnac Cedex (FR)
(74) Mandataire: BCF Global

(57) **Abrégé**

L'invention concerne un système de réception d'énergie électrique pour un aéronef (A), comportant un dispositif de réception d'énergie électrique (2), le dispositif de réception d'énergie électrique (2) comprenant un élément de réception d'énergie électrique, dit récepteur, configuré pour recevoir de l'énergie électrique émise par un émetteur d'énergie électrique, le dispositif de réception d'énergie électrique (2) étant monté mobile entre une position rétractée et une position déployée, le système de réception d'énergie électrique comprenant un compartiment (3) de logement dudit dispositif de réception d'énergie électrique (2) dans la position rétractée.

## Description

### Domaine technique

La présente invention se rapporte à un système de réception d'énergie électrique pour le déplacement d'un aéronef en phase de roulage.

### Technique antérieure

Avant son décollage ou après son atterrissage, un aéronef se déplace au sol en roulant sur une voie de circulation d'une installation aéroportuaire entre sa zone de stationnement et la piste de décollage et d'atterrissage. On parle de phase de roulage, ou de taxiing. Au cours de cette phase, l'aéronef utilise la poussée générée par ses ensembles de propulsion. L'utilisation d'un moteur de traction électrique alimenté par son groupe auxiliaire de puissance dit APU (pour « Auxiliary Power Unit » en anglais) est également possible mais reste dans le domaine des études de faisabilité.

Ces solutions ne sont pas optimales car l'aéronef consomme de l'énergie sous forme de carburant stocké dans ses réservoirs pour se déplacer au sol, ce qui conduit à augmenter la consommation de carburant et la masse embarquée de l'aéronef.

Le but de l'invention est de remédier au moins partiellement à ces inconvénients.

### Résumé

A cet effet, il est proposé un système de réception d'énergie électrique pour un aéronef, comportant un dispositif de réception d'énergie électrique, le dispositif de réception d'énergie électrique comprenant un élément de réception d'énergie électrique, dit récepteur, configuré pour recevoir de l'énergie électrique émise par un élément d'émission d'énergie électrique, dit émetteur, le dispositif de réception d'énergie électrique étant monté mobile entre une position rétractée et une position déployée, le système de réception d'énergie électrique comprenant un compartiment de logement dudit dispositif de réception d'énergie électrique (2) dans la position rétractée.

Grâce au système selon la présente invention, il est possible d'alimenter électriquement un moteur électrique pour les trains d'atterrissage de l'aéronef, ce qui permet d'éviter de recourir à la propulsion de l'aéronef pour les déplacements au sol, et ainsi de réduire la masse embarquée et la consommation de carburant de l'aéronef. Ce dernier ne consomme alors plus de carburant pour se déplacer au sol.

On note que l'émetteur est distinct du système ; qu'il n'en fait pas partie.

Selon un autre aspect, le dispositif de réception d'énergie électrique comprend une structure de maintien du récepteur et au moins un actionneur pour le pilotage de la structure entre la position rétractée et la position déployée du système.

Selon un autre aspect, le compartiment comprend un carénage muni d'au moins une paroi mobile entre la position fermée du compartiment et la position d'ouverture complète du compartiment.

Selon un autre aspect, ladite au moins une paroi mobile est solidaire de la structure, de sorte que l'actionneur pilote ladite au moins une paroi mobile entre la position fermée et la position d'ouverture complète.

Selon un autre aspect, le système comprend un actionneur pour faire pivoter le récepteur.

Selon un autre aspect, le système comprend un chariot porteur du récepteur.

Selon un autre aspect, le récepteur comprend un patin à induction, pour coopérer avec l'émetteur sans contact et/ou un contacteur pour coopérer avec l'émetteur par contact.

Selon un autre aspect, le système comprend un moteur électrique configuré pour commander au moins une roue d'un train d'atterrissage de l'aéronef et configuré pour être alimenté en énergie électrique via le récepteur.

L'invention a également pour objet un aéronef, comprenant un système tel que décrit précédemment.

Selon un autre aspect, le compartiment est fixé au fuselage de l'aéronef, de préférence à proximité d'un train d'atterrissage.

L'invention a également pour objet un système de transfert d'énergie électrique, comprenant un aéronef tel que décrit précédemment, et un émetteur d'énergie électrique configuré pour alimenter en énergie électrique le récepteur dans la position déployée du système de réception d'énergie électrique.

### Brève description des dessins

D'autres caractéristiques, détails et avantages apparaîtront à la lecture de la description détaillée ci-après, et à l'analyse des dessins annexés, sur lesquels :
**Fig. 1**

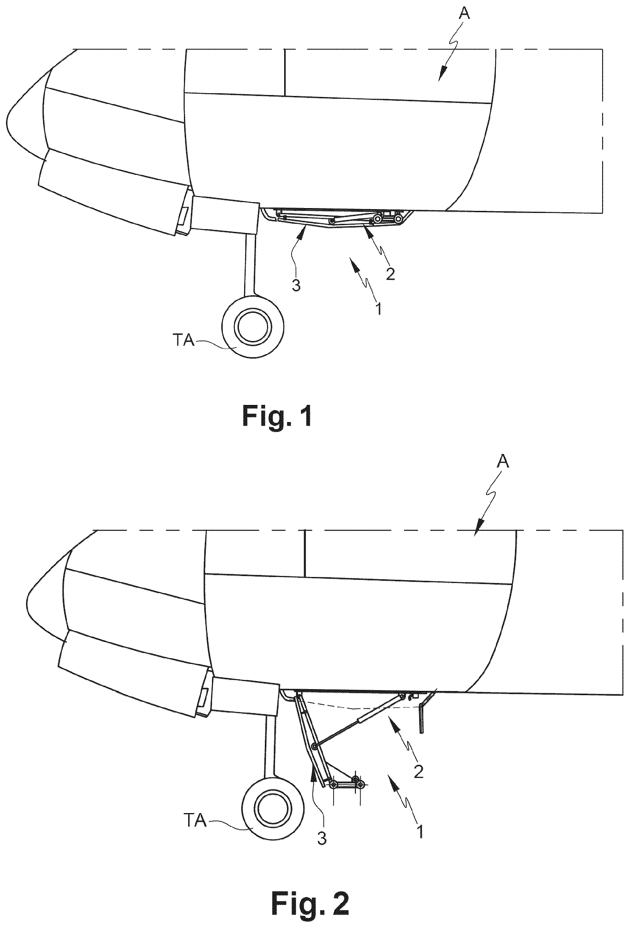

   [Fig. 1] est une vue schématique en perspective de côté d'une partie avant d'un aéronef muni d'un système de réception d'énergie électrique selon un mode de réalisation de la présente invention, dans une position rétractée.
**Fig. 2**
   [Fig. 2] est une vue schématique en perspective de côté de la partie avant de la figure 1, dans une position déployée du système de réception d'énergie électrique.
**Fig. 3**

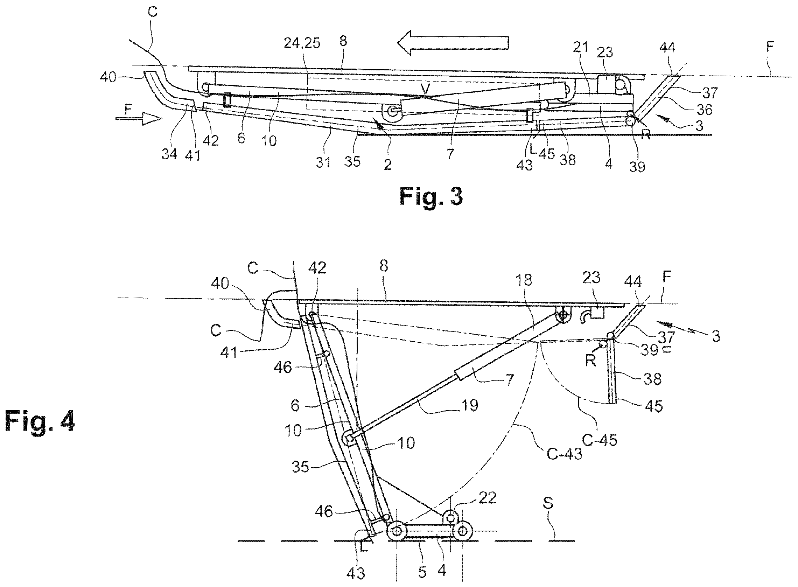

   [Fig. 3] est une vue schématique en perspective de côté du système de réception d'énergie électrique de la figure 1.
**Fig. 4**
   [Fig. 4] est une vue schématique en perspective de côté du système de réception d'énergie électrique de la figure 2.
**Fig. 5**

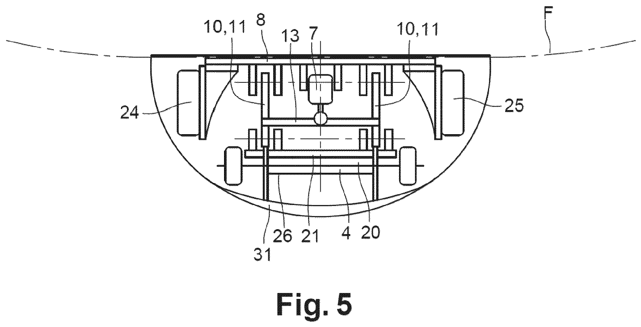

   [Fig. 5] est une vue schématique arrière du système de la figure 1.
**Fig. 6**

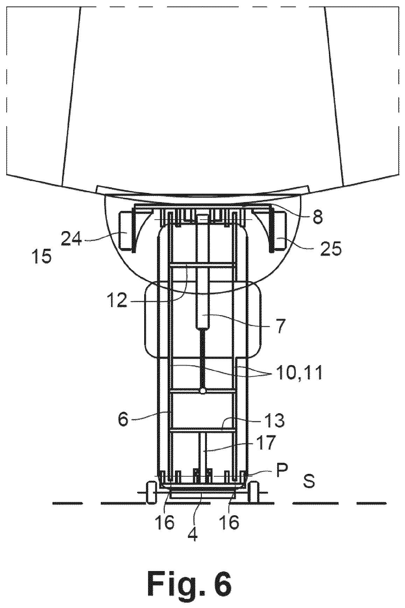

   [Fig. 6] est une vue schématique arrière du système de la figure 2.
**Fig. 7**

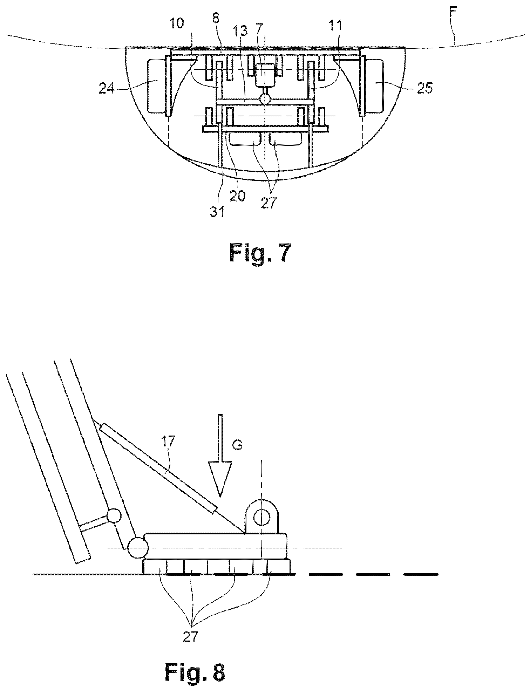

   [Fig. 7] est une vue schématique arrière du système de réception d'énergie électrique de la figure 1 selon une variante de réalisation de l'invention.
**Fig. 8**
   [Fig. 8] est une vue schématique d'un détail du système de réception d'énergie électrique de la figure 7.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en œuvre relativement simplifiées de la présente invention. Comme l'homme du métier le comprend, d'autres mises en œuvre de la présente invention peuvent être d'une plus grande complexité.

Dans certains cas, des exemples de modifications de la présente invention peuvent également être présentés. Ceci est fait simplement comme une aide à la compréhension, et, à nouveau non pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en œuvre de la présente invention, ainsi que les exemples spécifiques de celle-ci, visent à englober à la fois les équivalents structurels et fonctionnels de celle-ci, qu'ils soient actuellement connus ou développés à l'avenir.

Comme il ressort des figures 1 à 8, l'invention a pour objet un système de réception d'énergie électrique, référencé 1 sur les figures. Le système 1 comprend un dispositif de réception d'énergie électrique, référencé 2 (qui peut être vu comme le vérin de levage du système 1), et un compartiment 3 de logement du dispositif de réception d'énergie électrique 2. Le système 1 est destiné à équiper un aéronef A, et l'invention a également pour objet l'aéronef A muni du système 1.

Le dispositif de réception d'énergie électrique 2 comprend un élément de réception d'énergie électrique, dit récepteur, référencé 4. Le récepteur 4 est configuré pour recevoir de l'énergie électrique émise par un émetteur 5 distinct du système de réception d'énergie électrique 1, comme il sera détaillé ultérieurement.

Comme visible sur les figures, le dispositif 2 est monté mobile entre une position rétractée, illustrée sur les figures 1, 3 5, et 7, dans laquelle le récepteur 4 est disposé dans le compartiment 3, et une position déployée, illustrée sur les figures 2, 4, 6 et 8, dans laquelle le récepteur 4 est disposé hors du compartiment 3 et à distance suffisante pour recevoir l'énergie émise par l'élément émetteur 5.

Comme il ressort également des figures, le compartiment 3 est monté mobile entre une position fermée et une position dite d'ouverture complète.

Le système 1 est conformé pour que, lorsque le compartiment 3 est en position fermée, le dispositif 2 est en position rétractée, et, lorsque le compartiment 3 est en position d'ouverture complète, le dispositif 2 peut être déployé, comme il sera décrit ultérieurement.

On décrit maintenant le dispositif 2.

Le dispositif 2 comprend un support 6 du récepteur 4 monté mobile et un actionneur 7 de commande du mouvement du support 6. Le dispositif 2 comprend également un élément de structure 8 conformé pour être fixé au fuselage de l'aéronef A, et solidaire du support 6 et le l'actionneur 7.

Le support 6 comprend avantageusement deux bras parallèles, 10, 11, et au moins un bras de jonction qui solidarise les bras parallèles 10, 11, l'un à l'autre. Chaque bras de jonction est de préférence disposé orthogonalement aux bras parallèles 10, 11. Sur le mode de réalisation illustré, le support 6 comprend trois bras de jonction 12, 13, 14, appelés respectivement bras supérieur, inférieur et intermédiaire.

Chacun des bras 10, 11 s'étend entre une première extrémité 15 solidaire via une liaison pivot P de l'élément de structure 8 et une deuxième extrémité 16 solidaire via une liaison pivot P du récepteur 4.

Comme mieux visible sur la figure 6, le bras de jonction supérieur 12 est disposé en partie supérieure du système 1 lorsque le système 1 est en position déployée, par exemple dans la partie 1/5^{ème} supérieure. Autrement dit, le bras de jonction supérieur 12 est disposé au plus proche de l'extrémité supérieure 15 pour permettre de rigidifier celle-ci et par exemple à un niveau se trouvant dans la portion supérieure correspondant en hauteur au cinquième de la hauteur des bras 10, 11.

Le bras de jonction inférieur 13 est disposé en partie inférieure du système 1 lorsque le système 1 est en position déployée, par exemple dans la partie 1/5^{ème} inférieure. Autrement dit, le bras de jonction inférieur 13 est disposé au plus proche de l'extrémité inférieure 16 pour permettre de rigidifier celle-ci et par exemple à un niveau se trouvant dans la portion inférieure correspondant en hauteur au cinquième de la hauteur des bras 10, 11.

Le bras 13 est solidaire, de préférence en son milieu, d'un actionneur 17 de déploiement du récepteur 4, comme il sera décrit plus tard.

Le bras de jonction intermédiaire 14 est disposé entre le bras de jonction supérieur 12 et le bras de jonction inférieur 13, par exemple dans le 1/3 inférieur. Le bras 14 est solidaire, de préférence en son milieu, de l'actionneur 7.

L'invention n'est pas limitée à cette configuration et tout type de structure permettant d'être support du récepteur 4 peut être envisagée. En particulier, le dispositif 2 peut comprendre seulement un bras 10, ou plus de deux bras 10, 11 ; de même elle peut ne comprendre aucun bras de jonction, ou un ou deux bras de jonction, ou encore plus de trois bras de jonction. Les bras de jonction peuvent être régulièrement ou irrégulièrement espacés, selon la forme et les dimensions du compartiment 3, du dispositif 2, notamment.

Sur le mode de réalisation illustré, l'actionneur 7 est un vérin, par exemple hydraulique ou pneumatique, dont un cylindre 18 est solidaire de l'élément de structure 8 du système 1, et une tige rigide 19 solidaire par une extrémité du bras de jonction intermédiaire 14. La tige 19 coulisse dans le cylindre 18, grâce à un piston interne, entre une position de repos dans laquelle la tige est à l'intérieur du cylindre 18 et une position étendue, dans laquelle la tige 19 fait saillie du cylindre 18. Lorsque le vérin est en position de repos, le système 1 est en position rétractée. Lorsque la tige 19 coulisse entre la position de repos et la position étendue, le support 6 est repoussé par la tige 19, ce qui fait pivoter les bras parallèles 10, 11, autour de leur axe respectif des liaisons pivot 15, depuis la position rétractée du système 1 jusqu'à la position déployée du système 1.

Comme visible sur les figures, le système 1 comprend un chariot 20 porteur du récepteur 4. Le chariot 20 comprend une plateforme 21 sur laquelle sont montés les axes des liaisons pivot 16 des bras parallèles 10, 11. Le chariot 20 est soit muni de roues, comme sur une première variante préférée de réalisation, illustrée sur les figures 1 à 6, soit en est dépourvu, comme sur une deuxième variante de réalisation, illustrée sur les figures 7 et 8.

Le chariot 20 est avantageusement muni d'un axe 22 autour duquel un crochet 23 de l'élément de structure 8 est crocheté. L'axe 22 et le crochet 23 forment un moyen de verrouillage du dispositif 2 en position rétractée.

Le système 1 comprend également un moteur électrique 24 et une unité 25 de distribution de l'énergie électrique reçue par le récepteur 4. Le système comprend aussi un câble électrique C, ou faisceau électrique, qui se connecte à l'aéronef pour transférer l'énergie électrique. L'énergie électrique reçue par le récepteur 4 peut être transférée au moteur électrique 24, éventuellement via l'unité 25, pour commander les roues du train d'atterrissage. L'invention n'est pas limitée à cette configuration et l'énergie électrique reçue par le système 1 peut être transférée à un moteur électrique disposé en dehors du système 1, par exemple disposé au niveau des roues des trains d'atterrissage.

Le récepteur 4 est monté sous la plateforme 21.

Selon la première variante, le récepteur 4 se présente sous la forme d'un patin 26, tandis que, selon la deuxième variante, le récepteur 4 se présente sous la forme d'un ensemble de contacteurs 27.

Le patin 26 est conformé pour transférer sans contact l'énergie électrique émise par l'émetteur 5. Par exemple, selon une technologie inductive, l'émetteur 5, de préférence présent au sol S, est configuré pour générer un champ électromagnétique et le récepteur 26 est un élément à induction électromagnétique configuré pour générer un courant électrique lorsqu'il est positionné dans le champ magnétique généré par l'émetteur 5. Dans ce cas, le récepteur 26 comprend au moins une bobine.

Chaque contacteur 27 est conformé pour transférer l'énergie électrique émise par l'émetteur 5 lorsque le contacteur 27 est en contact avec l'émetteur 5 qui peut, par exemple, se présenter sous la forme de rails au sol S. Selon cette variante, l'actionneur 17, par exemple vérin pneumatique ou hydraulique, exerce une force suffisante pour que le transfert d'énergie électrique se fasse par friction.

On décrit maintenant le compartiment 3.

Comme visible sur les figures, le compartiment 3 comprend un carénage 31 muni d'au moins une paroi mobile entre une position fermée et une position dite d'ouverture complète. Le carénage 31 est destiné à être fixé à une partie du fuselage F de l'aéronef A, à proximité d'un train d'atterrissage, par exemple du train d'atterrissage avant TA, tel qu'illustré sur les figures 1 et 2.

On appelle V un volume interne délimité par le carénage 31, en position fermée de ladite au moins une paroi mobile, et par la partie de fuselage F inscrite dans le périmètre du carénage 31. Le volume V est suffisamment grand pour recevoir le dispositif de réception d'énergie électrique 2 en position rétractée.

Sur le mode de réalisation illustré, le compartiment 3 comprend une première paroi 34 fixe, destinée à être fixée sur le fuselage de l'aéronef et une deuxième paroi 35, montée mobile, éventuellement pivotante, entre une position fermée et une position dite d'ouverture complète. Le compartiment 3 comprend également une troisième paroi 36 de la forme d'un papillon comportant deux ailes, 37, 38, de part et d'autre d'un axe 39. L'aile 37 est destinée à être fixée au fuselage tandis que l'aile 38 est montée pivotante autour de l'axe 39 entre une position fermée et une position dite d'ouverture complète.

La position fermée de la paroi 35 coïncide avec la position fermée de l'aile 38 et, leurs positions fermées définissent la position fermée du carénage 31.

La position d'ouverture complète de la paroi 35 coïncide avec la position d'ouverture complète de l'aile 38, et leurs positions d'ouverture complète définissent la position d'ouverture complète du carénage 31.

La paroi fixe 34 présente une forme courbée s'étendant entre un bord 40 de fixation du compartiment 3 au fuselage de l'aéronef et un bord 41 de jonction avec la paroi 35.

La paroi mobile 35 présente une forme courbée, par exemple de section en forme d'accent circonflexe ou d'arc de cercle, s'étendant entre un bord 42 d'articulation et un bord libre 43. En position fermée, le bord 42 est jointif du bord 41 de la paroi fixe 34. Le bord libre 43 décrit un arc de cercle C-43, illustré en pointillés sur la figure 4, entre la position fermée et la position d'ouverture complète. Autrement dit, la position d'ouverture complète de la paroi mobile 35 correspond à la fin de course du bord libre 43 après avoir parcouru l'arc de cercle C-43, depuis la position fermée. Sur le mode de réalisation illustré, le secteur correspondant à l'arc de cercle C-43 est d'un angle de 80°.

L'aile 37 présente une forme plane entre un bord 44 de fixation du papillon 36 au fuselage et l'axe 39. L'aile 38 présente une forme plane entre l'axe 39 et un bord libre 45. En position fermée, le bord 45 est jointif du bord libre 43 de la paroi 35. Le bord libre 45 décrit un arc de cercle C-45, illustré en pointillés sur la figure 4, entre la position fermée et la position d'ouverture complète. Autrement dit, la position d'ouverture complète de la paroi mobile 36 correspond à la fin de course du bord libre 45, après avoir parcouru l'arc de cercle C-45 depuis la position fermée. Sur le mode de réalisation illustré, le secteur correspondant à l'arc de cercle C-45 est d'un angle de 90°.

Ainsi, lorsque la paroi 35 et l'aile 38 sont en position fermée, le carénage 31 est fermé et l'élément de structure 8 et les parois 34, 35 et 36 délimitent le volume interne V. Dans cette position, le dispositif de réception d'énergie électrique 2 est enfermé dans le volume V en position rétractée.

Lorsque la paroi 35 et l'aile 38 sont en fin de course respective, en position d'ouverture complète, le dispositif de réception d'énergie électrique 2 peut être déployé.

Avantageusement, les bras parallèles 10 et 11 sont posés sur une surface interne de la paroi mobile 35, par exemple par via des tétons 46.

On décrit maintenant le fonctionnement du système 1, lorsqu'il équipe l'aéronef A.

En phase de vol, le système 1 est en position de repos : le carénage 31 est fermé, et le compartiment 3 loge le dispositif 2 en position rétractée. Dans cette position, le système 1 augmente faiblement la trainée et a peu voire pas d'impact sur l'aérodynamisme de l'aéronef A.

En phase de roulage, une unité de contrôle pilote le système 1 pour le mettre en position de travail. Le crochet pivote autour de l'axe 22, ce qui déverrouille le système 1. L'actionneur 7 repousse le support 6 contre la paroi mobile 35, ce qui ouvre le compartiment 3. Lorsque le carénage 31 est en position d'ouverture complète, l'actionneur 17 repousse le chariot 20 contre le sol.

Une fois complètement déployé, le dispositif 2 peut recevoir l'énergie électrique de l'émetteur 5, soit sans contact, soit par contact.

A l'inverse, lorsque l'aéronef est en position pour le décollage, le dispositif 2 est rétracté dans le compartiment 3 qui se referme, de sorte que le système 1 ne perturbe pas le vol.

On note que, bien que non représenté sur les figures 1 à 6, le système 1 selon le premier mode de réalisation comprend également, avantageusement, un tendeur, comme par exemple le vérin 17, pour maintenir au sol le chariot 20. Ainsi, le vérin 17 assure soit une distance constante entre le patin 26 et le sol (première variante), sois un contact continu entre les contacteurs 27 et le sol (deuxième variante).

Sur les figures 3 et 4, on a représenté une lèvre L le long du bord 43, qui permet de bien maintenir le compartiment 3 en position fermée et d'assurer un bon aérodynamisme du système 1 en vol. Sur ces figures, on a également représenté un rouleau R contre lequel le chariot 20 pousse lorsque le compartiment se ferme, ce qui entraine la fermeture de l'aile 38.

Ainsi, le système 1 est un moyen plus écologique et silencieux pour le déplacement de l'aéronef en phase de taxiing, tout en représentant une masse supplémentaire et une perturbation minimes sur l'aéronef en vol. En particulier, grâce au système 1, l'aéronef ne consomme plus de carburant en phase de roulage, et réduit ses émissions de gaz toxiques, de type NOx et COx.

Sur le mode de réalisation illustré, le système 1 se présente sous forme de module, qu'il suffit de venir fixer sur le fuselage d'un aéronef, ce qui permet d'équiper facilement un aéronef, et de pouvoir fabriquer le système tout en assemblant l'aéronef pour gagner du temps. Néanmoins, l'invention n'est pas limitée à ce mode de réalisation, et couvre un autre mode de réalisation dans lequel le système 1 est dépourvu de l'élément de structure 8 qui, au lieu de se trouver au niveau du système, est au niveau du fuselage. Selon ce mode de réalisation, le fuselage est équipé de charnières pour le dispositif de réception d'énergie 2 et des platines de fixation du carénage 3.

Des modifications et des améliorations aux mises en œuvre décrites ci-dessus de la présente invention peuvent apparaître à l'homme du métier. En particulier, les modes de réalisation et variantes décrites sont combinables dans la mesure où ils ne sont pas incompatibles. La description ci-dessus est illustrative au travers d'exemples plutôt que limitative. La portée de la présente invention est donc limitée uniquement par la portée des revendications ci-dessous.

## Revendications

1. Système de réception d'énergie électrique pour un aéronef (A), comportant un dispositif de réception d'énergie électrique (2), le dispositif de réception d'énergie électrique (2) comprenant un élément de réception d'énergie électrique (4), dit récepteur (4), configuré pour recevoir de l'énergie électrique émise par un élément d'émission d'énergie électrique, dit émetteur (5), le dispositif de réception d'énergie électrique (2) étant monté mobile entre une position rétractée et une position déployée, le système de réception d'énergie électrique comprenant un compartiment (3) de logement dudit dispositif de réception d'énergie électrique (2) dans la position rétractée.

2. Système selon la revendication précédente, dans lequel le dispositif de réception d'énergie électrique (2) comprend une structure (6) de maintien du récepteur (4) et au moins un actionneur (7) pour le pilotage de la structure (6) entre la position rétractée et la position déployée du système (1).

3. Système selon l'une des revendications précédentes, dans lequel le compartiment (3) comprend un carénage (31) muni d'au moins une paroi mobile entre une position fermée du compartiment (3) et une position d'ouverture complète du compartiment (3), le système (1) étant configuré de sorte que, lorsque le compartiment (3) est en position fermée, le dispositif de réception d'énergie électrique (2) est en position rétractée, logé dans le compartiment (3) et, lorsque le compartiment (3) est en position d'ouverture complète, le dispositif de réception d'énergie électrique (2) est en position déployée, le récepteur (4) étant disposé hors du compartiment (3).

4. Système selon la revendication 3, dans lequel ladite au moins une paroi mobile est solidaire de la structure (6), de sorte que l'actionneur (7) pilote ladite au moins une paroi mobile entre la position fermée et la position d'ouverture complète.

5. Système selon l'une des revendications précédentes, comprenant un actionneur pour faire pivoter le récepteur (4).

6. Système selon l'une des revendications précédentes, comprenant un chariot porteur du récepteur (4).

7. Système selon l'une des revendications précédentes, comprenant un moyen de verrouillage (22, 23) du dispositif de réception d'énergie électrique (2) en position rétractée.

8. Système selon l'une des revendications précédentes, comprenant un élément de structure (8) conformé pour être fixé au fuselage de l'aéronef (A), et solidaire du support (6) et de l'actionneur (7).

9. Système selon la revendication précédente, comprenant au moins un bras (10, 11) s'étendant entre une première extrémité (15) solidaire via une liaison pivot (P) de l'élément de structure (8) et une deuxième extrémité (16) solidaire via une liaison pivot (P) du récepteur (4).

10. Système selon l'une des revendications précédentes, dans lequel le récepteur (4) comprend un patin à induction, pour coopérer avec l'émetteur (5) sans contact et/ou un contacteur pour coopérer avec l'émetteur (5) par contact.

11. Système selon l'une des revendications précédentes, comprenant un moteur électrique configuré pour commander au moins une roue d'un train d'atterrissage de l'aéronef et configuré pour être alimenté en énergie électrique via le récepteur (4).

12. Aéronef, comprenant un système selon l'une des revendications précédentes.

13. Aéronef selon la revendication précédente, dans lequel le compartiment est fixé au fuselage de l'aéronef, de préférence à proximité d'un train d'atterrissage.

14. Système de transfert d'énergie électrique, comprenant un aéronef selon la revendication 9 ou la revendication 10, et un émetteur d'énergie électrique configuré pour alimenter en énergie électrique le récepteur (4) dans la position déployée du système de réception d'énergie électrique (1).
